# EUROPEAN PATENT APPLICATION

(11) **EP 0 761 965 A1**
(43) Date of publication of application: **12.03.1997**
(21) Application number: 96114094.4
(22) Date of filing: 03.09.1996
(51) Int. Cl.: F03D 9/00

(54) **Wind turbine with photovoltaic cells on mast**

(30) Priority: 04.09.1995 JP 226478/95
(71) Applicant: Ishikawajima-Harima Heavy Industries Co., Ltd., Chiyoda-ku, Tokyo (JP)
(72) Inventor: Araki, Takashi, Narita-shi, Chiba (JP); Akiyama, Kazuho, Setagaya-ku, Tokyo (JP)
(74) Representative: Schaumburg, Thoenes & Thurn

(57) **Abstract**

A power generation device (1) (or 21) has wind power generation device (2) for generating electricity by having its windmill (4) on a tower(3) rotated by wind force, solar power generation device (9) provided onto the wind power generation device (2) at a predetermined height for generating electricity by utilizing reflection of sunbeam, and light focusing device (10) (or 14) provided below the solar power generation device (9) for reflecting and focusing sunbeam onto the solar power generation device (9). With this power generation device (1) (or 21) more efficient utilization of dead space in wind power generation plants can be achieved.

## Description

### BACKGROUND OF THE INVENTION

### Technical Field

This invention generally relates to power generation devices, and more specifically to a power generator for power generation plants utilizing natural energy.

### Background Art

In recent years, power generation plants of a variety of designs that utilize natural energy have been constructed throughout the world. A typical example of them is wind power generation plants, which include a number of wind power generation devices for generating electricity by utilizing wind energy. A wind power generation device of such a type have its windmill provided on a tower rotated by wind and transforms the obtained rotational (kinetic) energy into electric energy for power generation.

However, in the conventional wind power generation plants, they are provided with only a number of windmill towers as the wind power generation devices and have not achieved the maximum use of its spacious device area near the ground. That is, the conventional power generation plants have a lot of dead space on the ground that is not effectively utilized.

### SUMMARY OF THE INVENTION

An object of the present invention is to provide a wind power generation device that allows more efficient utilization of its device area near the ground. In order to achieve the object, as a first aspect of the present invention, the power generation device has wind power generation means for generating electricity by having its windmill on a tower rotated by wind force, solar power generation means provided onto the wind power generation means at a predetermined height for generating electricity by utilizing reflection of sunbeam, and light focusing means provided below the solar power generation means for reflecting and focusing sunbeam onto the solar power generation means.

According to the first aspect of the present invention, dead space in wind power generation plants can be more efficiently utilized for solar power generation, improving the power generation efficiency by the realization of multiple(combined) power generation.

The light focusing means may include a parabolic reflection mirror.

The light focusing means may include a plurality of separate reflection mirrors.

If the parabolic reflection mirror or separate reflection mirrors are provided, sunbeam can be reflected and focused onto the solar power generation means. This increases the energy density provided onto the solar power generation means and thus enhances the photoelectric transformation rate and the power generation capacity of the device.

### BRIEF DESCRIPTION OF THE DRAWINGS

Figure 1 is a front view of a power generation device according to the preferred embodiment of the present invention.

Figure 2 is a plan view of the power generation device of Figure 1.

Figure 3 is a front view of an alternative power generation device provided according to the present invention.

### DESCRIPTION OF THE PREFERRED EMBODIMENTS

Hereinafter, the preferred embodiments of the present invention will be described in detail in accordance with the accompanying drawings.

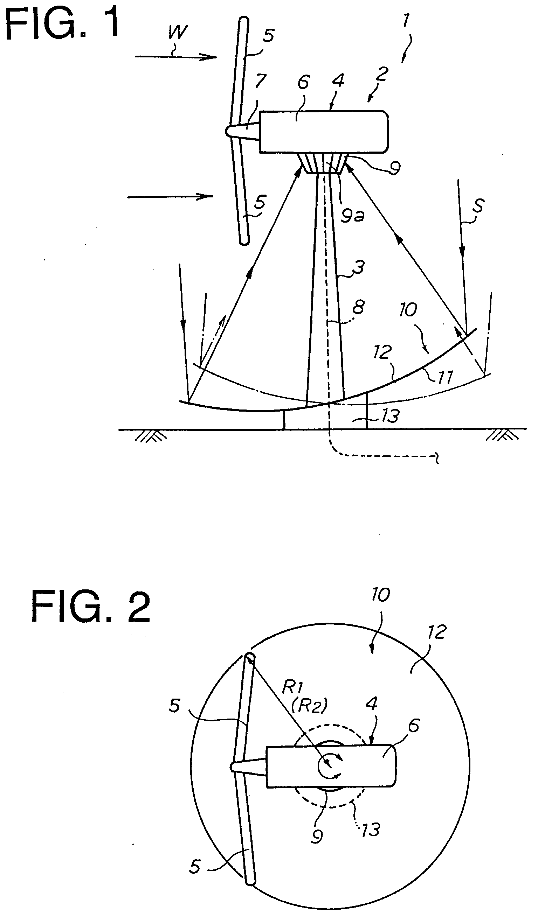

Figure 1 shows the front view of a power generation device according to the present invention. A number of power generation devices 1 is provided in a power generation plant area spaced from each other. Figure 1 shows one of the power generation devices 1.

The power generation device 1 has a wind power generation device (wind power generation means) 2. The wind power generation device 2 include a tower 3 and a windmill 4. The tower 3 having a predetermined height stands on the ground and a the windmill 4 is provided on the top of the tower 3 such that it can be rotated(slewed) around the axis of the tower 3. The windmill 4 has a propeller with blades 5 that rotates around its horizontal axis. The blades 5 are designed such that they rotate on a plane perpendicular to the ground. The windmill 4 also has a nacelle which contains a generator(not shown) within. The generator is driven by the rotational axis 7 of the blades 5 and generates electricity. The generated electricity is transferred to a battery facility and the like(not shown) through a cable 8 provided along the tower 3. The nacelle 6 also contains a slew device(not shown) within that makes the windmill 4 slew such that wind W always hit the front of the blades 5.

On the tower 3, a solar battery (solar power generation means) 9 that generates electricity by utilizing reflection of sunbeam is provided right under the windmill 4. The solar battery 9 has a crown-shaped outer photosensitive surface 9a which surrounds the tower 3 right under the nacelle 6. The diameter of the upper rim of the "crown" is larger than that of the bottom rim of the "crown". This solar battery 9 is also connected with the cable 8 and transfers generated electricity to the other facilities (not shown) through the cable 8. As shown, the height of the tower 3 is much larger than that of the solar battery 9.

A parabolic reflection mirror 10 is provided as light focusing means for reflecting and focusing sunbeam onto the solar battery 9 at the bottom end of the tower 3 near the ground. The parabolic reflection mirror 10 includes a mirror surface 12 facing the sky. The mirror surface 12 is formed, for example, by putting a mirror(or mirrors) on the upper(inner) surface of a shallow - bowl shaped curved base plate 11 or by chemically processing the upper(inner) surface of the base plate 11 to form a mirror surface. The parabolic reflection mirror 10 is supported by a sunbeam chase mechanism 13 underneath the mirror 10. The sunbeam chase mechanism 13 tilts the parabolic reflection mirror 10 in any direction in accordance with the change of incident angle of incoming sunbeam S. The sunbeam chase mechanism 13 contains a photosensor, a servomotor, a computer- operated control device and the like (not shown)inside and operates by receiving the electricity generated by the windmill 4 or the solar battery 9 through the cable 8.

It should be noted that as shown in Figure 2 the radius R1 of the parabolic reflection mirror 10 is approximately equal to the radius R2 of the circular locus drawn by the outer end of the blades 5 as the windmill 4 slews around.

Next, the function of the power generation device 1 will be described.

First, the wind power generation device 2 has its blades 5 rotated by wind power of the wind W and has the generator within the nacelle 6 driven for generation of electricity like other ordinary wind power generation devices.

On the other hand, the mirror surface 12 of the parabolic reflection mirror 10 reflects sunbeam S and all the reflected sunbeam S from the mirror surface 12 focuses on the photosensitive reflection surface 9a of the solar battery 9. Then electricity is generated by the solar battery 9. Since the sunbeam chase mechanism 13 tilts the parabolic reflection mirror 10 as described above, the power generation by the solar battery 9 can be performed as long as the sun shines.

Accordingly, the power generation device 1 of the present invention can perform both wind power generation and solar power generation. Due to this multiple(combined) power generation, the device 1 enjoys an enhanced power generation capacity.

As another distinguished characteristic of the power generation device 1 of the present invention, it 1 can perform solar power generation by utilizing the dead space associated with the conventional wind power generation device. In contrast with the conventional wind power generation plants which do not efficiently utilize the space below the wind power generation devices 2, the power generation device 1 of the present invention is provided with the solar battery 9 and the parabolic reflection mirror 10 in such space near the ground and thus can achieve more efficient utilization of the device space near the ground.

Further, in the present invention the largest distance as possible between the solar battery 9 and the parabolic reflection mirror 10 is achieved by providing the solar battery 9 on the top of the tower 3 while locating the parabolic reflection mirror 10 at the bottom end of the tower 3. Accordingly, the power generation device 1 can enjoy merits such as a large reflection area of the parabolic reflection mirror 10 due to its large radius and small curvature. As a result, not only more sunbeam S can be supplied to the solar battery 9 but also focusing of the sunbeam S on the solar battery 9 becomes easier.

In solar batteries in general, the increase in sunbeam energy density(luminous density) is proportional to the increase in photoelectric transformation rate. Since the solar battery 9 of the power generation device 1 of the present invention receives reflected and focused sunbeam S having a higher luminous density, it enjoys an enhanced photoelectric transformation rate, and thus enhanced power generation. In addition, the size of the solar battery 9 can be reduced due to this higher luminous density, contributing cost reduction. If the solar battery were arranged to get direct sunbeam without reflection and focusing, a much larger size of the battery would be required in order to generate the same amount of power as the power generation device 1 does.

Further, the radius R1 of the parabolic reflection mirror 10 generally coincides with the radius R2 of the circular locus drawn by the blades 5. Thus, the power generation device 1 achieves the maximum utilization of the dead space below the windmill 4, as well as improving its appearance.

Further, the power generation device 1 can easily be realized by adding the solar battery 9 and the like onto the conventional wind power generation device. Thus, it 1 has an advantage of being easily constructed.

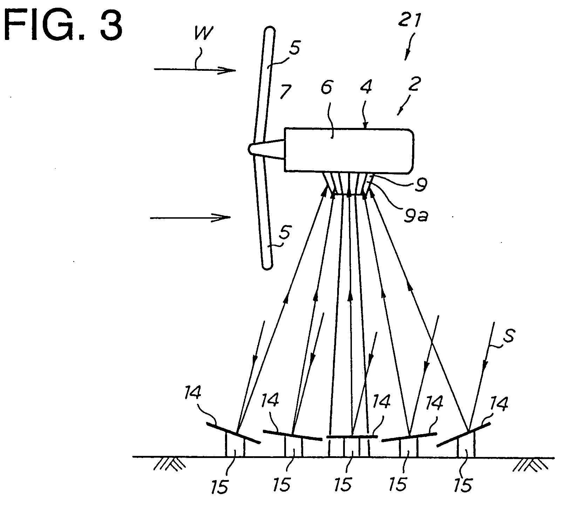

Next, an alternative power generation device 21 is shown in Figure 3 and will be described hereinafter. Like reference numerals are used to identify identical components.

The alternative power generation device 21 has a plurality of separate reflection mirrors 14 as light focusing means for reflecting and focusing sunbeam S onto the solar battery 9. Each separate reflection mirror 14 has a sunbeam chase mechanism 15 of a smaller size. The sunbeam chase mechanism 15 supports the associated separate reflection mirror 14 and also tilts it to any direction such that the mirror 14 can always reflect sunbeam S onto the solar battery 9. For this purpose, each sunbeam chase mechanism 15 shown in Figure 3 is independently operated such that its associated separate reflection mirror 14 be tilted by a desired angle. Like the parabolic reflection mirror 10, these separate reflection mirrors 14 occupy as a whole approximately the same area as the area of the circular locus drawn by the blades 5. As a result, the separate reflection mirrors 14 achieve generally the same function and effects as the parabolic reflection mirror 10 does. It should be appreciated that the area defined by these collective separate reflection mirrors 14 does not need to coincide with the area of the circular locus drawn by the blades 5 but may exceed it if the circumstance permits. In addition, the geometry of the area defined by these separate reflection mirrors 14 does not need to be circular. Further, the parabolic reflection mirror 10 may be designed as a collective form of these separate reflection mirrors 14.

Other alternative models of the power generation device 1 have also been contemplated. For example, the solar battery 9 may be provided on the underneath surface of the nacelle 6, or slightly below the top of the tower 3. The parabolic reflection mirror 10 or the separate reflection mirrors 14 may be located slightly above the ground. The size of the reflection mirrors 10, 14 may be changed as desired. As for the windmill 4, a windmill with a perpendicular axis (e.g. Darrieus type) may be employed. In this case, those windmills may be provided onto a lower position of the tower 3.

While the invention has been particularly shown and described with reference to the preferred embodiments thereof, it is well understood by those skilled in the art that various changes and modifications can be made in the invention without departing form the spirit and scope of the invention.

## Claims

1. A power generation device (1) (or 21) characterized in that it comprises:
wind power generation means (2) for generating electricity by having its windmill (4) on a tower(3) rotated by wind force;
solar power generation means (9) provided onto the wind power generation means (2) at a predetermined height for generating electricity by utilizing reflection of sunbeam; and
light focusing means (10) (or 14) provided below the solar power generation means (9) for reflecting and focusing sunbeam onto the solar power generation means (9).

2. The power generation device (1) (or 21) described in claim 1 characterized in that the light focusing means (10) (or 14) includes a parabolic reflection mirror (10).

3. The power generation device (1) (or 21) described in claim 1 or 2 characterized in that the light focusing means (10) (or 14) includes a plurality of separate reflection mirrors (14).
